# EUROPÄISCHE PATENTSCHRIFT

(11) **EP 3 166 792 B1**
(45) Veröffentlichungstag und Bekanntmachung des Hinweises auf die Patenterteilung: **04.11.2020**
(21) Anmeldenummer: 15734163.7
(22) Anmeldetag: 06.07.2015
(51) Int. Cl.: B32B 27/40, E04D 13/16, E04D 12/00, C08G 18/00, B32B 27/08

(54) **WASSERDAMPFDURCHLÄSSIGE VERBUNDTEILE**
MOISTURE VAPOUR PERMEABLE COMPOSITE PARTS
PIÈCES COMPOSITES PERMÉABLES À LA VAPEUR D'EAU

(30) Priorität: 11.07.2014 EP 14176657; 27.01.2015 EP 15152634
(43) Veröffentlichungstag der Anmeldung: 17.05.2017
(73) Patentinhaber: Covestro Intellectual Property GmbH & Co. KG, 51373 Leverkusen (DE)
(72) Erfinder: WOESTE, Govert, 40237 Düsseldorf (DE); BROICH, Markus, 41836 Hückelhoven (DE)
(74) Vertreter: Levpat
(86) Internationale Anmeldenummer: PCT/EP2015/065283
(87) Internationale Veröffentlichungsnummer: WO 2016/005299

(56) Entgegenhaltungen:
- EP-A1- 1 319 503
- DE-A1- 19 706 380
- DE-A1-102005 012 796

## Beschreibung

Die Erfindung betrifft wasserdampfdurchlässige, flächige Verbundteile bestehend aus mindestens zwei Schichten, wobei mindestens eine Schicht aus einem Polyester- und Polyether-basierten thermoplastischen Polyurethan besteht, und deren Verwendung.

Thermoplastische Polyurethanelastomere (TPU) sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Zusammenfassende Darstellungen von TPU, ihren Eigenschaften und Anwendungen finden sich in Kunststoffe 68 (1978), S. 819-825 und Kautschuk, Gummi, Kunststoffe 35 (1982), S. 568-584.

TPU werden aus linearen Polyolen, meist Polyester- oder Polyetherpolyolen, organischen Diisocyanaten und kurzkettigen Diolen (Kettenverlängerern) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, wodurch sich die Eigenschaften des Produkts einstellen lassen. Je nach molaren Verhältnissen von Polyolen zu Kettenverlängerern ergeben sich Produkte in einem weiten Shore-Härte-Bereich. Der Aufbau der thermoplastisch verarbeitbaren Polyurethanelastomeren kann entweder schrittweise (Prepolymer-verfahren) oder durch die gleichzeitige Reaktion aller Komponenten in einer Stufe erfolgen (one-shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Neben Katalysatoren können den TPU-Aufbaukomponenten auch Hilfsmittel und Zusatzstoffe zugesetzt werden.

Vor allem in der Textil- und in der Bauindustrie werden TPU in Form von extrudierten Folien eingesetzt. Im Verbund mit Textilschichten oder vliesartigen Geweben finden sie Anwendung in wetterfesten Kleidungsstücken, Zeltbahnen, Dachunterspannbahnen oder Fassadenspannbahnen (Verbundteile). Aufgabe des TPU ist es hierbei jeweils, einerseits als Barriere für Wasser in flüssiger Form (z.B. Regen) zu wirken und andererseits Wasser im gasförmigen Zustand vom Innenraum an den Außenraum abzugeben, um ein möglichst angenehmes Innenraumklima zu erhalten. Im Gegensatz zu anderen Materialien kann TPU diese Doppelfunktion ohne Erzeugung von Mikroporen in der TPU-Schicht erfüllen.

Von entscheidender Bedeutung sind neben einer guten Wasserdampfdurchlässigkeit derartiger Verbundteile und damit der TPU-Schicht sowohl eine möglichst niedrige Quellung als auch ausreichende mechanische Eigenschaften der im Verbundteil verwendeten TPU-Folien. Eine zu stark ausgeprägte Quellneigung der TPU-Folie erhöht die Gefahr einer Ablösung der TPU-Folie vom zum Verbund gehörenden anderen Schichten (z.B. Vlies), auch Unterbau genannt. Infolge dieser Ablösung sind die zumeist sehr dünnen TPU-Folien/Schichten zusätzlich der Gefahr von Schädigungen in Form von z.B. Rissbildungen ausgesetzt. Zudem erschweren unzureichende mechanische Eigenschaften der eingesetzten TPU-Folie nicht nur die Verarbeitung zum Verbundteil, sondern erhöhen ebenfalls das Risiko von Schädigungen und führen zu fühlbaren Einbußen der Funktionalität der Verbundteile.

In EP-A 1937743 werden TPU mit 30-55 Gew.-% Hartsegment (Diisocyanat und Kettenverlängerer) und 45-70 Gew.-% Weichsegment beschrieben. Das Weichsegment umfasst dabei 20-80 Gew.-% Polyesterdiol und 20-80 Gew.-% Poly(oxypropylen)poly(oxyethylen)glycol-Polyetherdiol, wobei der Gehalt an Oxyethylengruppen weniger als 25 Gew.-% des Polyetherdiols beträgt. Der Oxyethylengruppengehalt bezogen auf die Gesamtheit der Polyole (Weichsegment) liegt somit unter 20 Gew.-%. Die Wasserdampfdurchlässigkeit ist ungenügend.

Die US-A 2008/0269454 offenbart TPU aus 4,4'-Diphenylmethandiisocyanat, 20-60 Gew.-% hydrophilen Polyetherpolyolen, umfassend Polyethylenglyol, Polypropylenglycol oder Polytetramethylenglycol, mit einem Kohlenstoff/Sauerstoff-Verhältnis von 2:1 bis 2,4:1 und 10-40 Gew.-% aliphatischen Polyesterpolyolen, die teilweise eine gute Wasserdampfdurchlässigkeit und gute Verarbeitbarkeit zu Filmen aufweisen. Die hier beschriebenen TPU quellen jedoch oder die Wasserdampfdurchlässigkeit ist nicht ausreichend. Zum Teil sind auch die Rohstoffkosten zu hoch.

In EP-A 1599522 geht es um TPU aus einem Polyisocyanat, einem symmetrischen Kettenverlängerer, einem weiteren Kettenverlängerer, dessen Anteil an der Kettenverlängerergesamtmenge 1-50 mol% beträgt und dessen Stoffmenge im Verhältnis zum Gewichtsprozentanteil des Polyetherpolyols 0,1 bis 10 beträgt, einem Polyesterpolyol und 1-50 Gew.-%, bezogen auf die Gesamtmenge an Polyol, eines Polyether-co-polyols, das Polytetramethylenetherglycol, Polypropylenoxid, Poly(propylenoxid-co-ethylenoxid), Polyethylenoxid oder Kombinationen davon umfasst. Die TPU haben den Nachteil, dass sie entweder quellen, eine niedrige Wasserdampfdurchlässigkeit aufweisen oder die Rohstoffkosten hoch sind.

In US-A 3493634 werden TPU aus einem aromatischen Diisocyanat sowie einer Mischung aus 60-85 Teilen Polyester, 15-40 Teilen Poly(alkylenoxid) und 1,25-12,8 mol, bezogen auf ein Mol Polyester und Poly(alkylenoxid), eines aliphatischen Glycols, welches 2-12 Kohlenstoffatome enthält, beschrieben. Die Mischung aus Polyester, Poly(alkylenoxid) und Glycol soll ein mittleres Molekulargewicht von 300-450 aufweisen. Die TPU zeigen eine verbesserte Spritzgießfähigkeit. Die TPU haben allerdings den Nachteil, dass sie entweder eine niedrige Wasserdampfdurchlässigkeit aufweisen oder die Rohstoffkosten hoch sind.

In US-A 4124572 werden TPU offenbart, die aus einem Poly(oxypropylen)-poly(oxyethylen)glycol, welches 25-60 Gew.-% Oxyethylengruppen enthält, einem Polyesterpolyol, einem Polyisocyanat aus der Gruppe bestehend aus 2,4-Toluoldiisocyanat, Methylen-bis-(4-phenylisocyanat), 4,4'-Diisocyanatodicyclo-hexylmethan und Isophorondiisocyanat sowie einem Kettenverlängerer aufgebaut sind, wobei das molare Verhältnis des Kettenverlängerers zu Poly(oxypropylen)-poly(oxyethylen)glycol und Polyesterpolyol 3:1 bis 10:1 beträgt und wobei das Gewichtsverhältnis des Poly(oxypropylen)-poly(oxyethylen)glycols zum Polyesterpolyol 10/90 bis 90/10 beträgt. Die so erhaltenen TPU weisen gemäß der Beschreibung gute mechanische und elastische Eigenschaften, gute Wärmestabilität und Anfärbbarkeit sowie gute Verarbeitbarkeit und niedrige Kosten auf. Ihre Wasserdampfdurchlässigkeit ist allerdings schlecht.

DE 19706380 A1 offenbart atmungsaktive Mehrschichtfolie.

EP 1319503 A1 Kompositteile von Aussenschichten und Polyurethan Sandwich-Materialien und ihrer Herstellung.

DE 102005012796 A1 ein Verfahren zur Herstellung von faserverstärkten Verbundteilen

Aufgabe war es, ein flächiges Verbundteil aus mindestens zwei Schichten, von denen mindestens eine aus TPU besteht, zur Verfügung zu stellen, wobei die TPU-Schicht auf vergleichsweise kostengünstigen Rohstoffen basiert, die ausreichend reaktiv sind, um einfach zu einer TPU-Schicht verarbeitet zu werden, und wobei die TPU-Schicht und damit das Verbundteil eine hohe Wasserdampfdurchlässigkeit bei gleichzeitig niedriger Quellung und ausreichenden mechanischen Eigenschaften aufweist.

Diese Aufgabe konnte dadurch gelöst werden, dass als TPU-Schicht im Verbundteil ein TPU eingesetzt wird, das auf einer Mischung von Polyetherpolyolen und Polyesterpolyolen basiert. Dabei muss in dieser Mischung ein bestimmter Gehalt an Oxyethylen-Einheiten eingehalten und zudem muss ein bestimmtes Verhältnis zwischen der TPU-Hartsegment- und der TPU-Weichsegmentphase, definiert über das molare Verhältnis aus Kettenverlängerer (Komponente B) zu Polyol (Komponente C und Komponente D), eingestellt werden.

Gegenstand der Erfindung sind wasserdampfdurchlässige, flächige Verbundteile bestehend aus mindestens einer Schicht (i), die nicht aus thermoplastischem Polyurethan besteht, ausgewählt aus der Gruppe bestehend aus Schichten aus Textilien, Vliesen, thermoplastischen Polymeren, Papier oder Pappe oder Metallgitter mit mechanisch erzeugten Löchern, mindestens einer Schicht (ii) aus Polyetherpolyol und Polyesterpolyol basiertem thermoplastischem Polyurethan und gegebenenfalls weiteren Schichten (iii) aus thermoplastischem Polyurethan, die nicht direkt flächig an die Schicht (ii) angrenzen, wobei die Schicht (ii) aus einem thermoplastischen Polyurethan besteht, das erhältlich ist aus der Reaktion der Komponenten bestehend aus
A) mindestens einem organischen Diisocyanat,
B) mindestens einer Komponente mit zwei Hydroxylgruppen und jeweils einem zahlenmittleren Molekulargewicht von 60 bis 490 g/mol als Kettenverlängerer,
C) einer Komponente bestehend aus einem oder mehreren Polyetherpolyolen mit jeweils einem zahlenmittleren Molekulargewicht von 500-5000 g/mol, von denen mindestens ein Polyetherpolyol (C1) Ethylenoxideinheiten enthält,
D) 10 bis 85 Gew.-% bezogen auf die Gesamtmenge von C) und D) eines oder mehrerer aliphatischer Polyesterpolyole mit jeweils einem zahlenmittleren Molekulargewicht von 500-5000 g/mol,
   in Gegenwart von
E) gegebenenfalls Katalysatoren,
F) gegebenenfalls Hilfs- und/oder Zusatzstoffen,
   wobei das Molverhältnis der NCO-Gruppen in A) zu den gegenüber Isocyanat reaktiven Gruppen in B), C) und D) 0,9:1 bis 1,2:1 beträgt,
   dadurch gekennzeichnet, dass der gesamte Gehalt an Ethylenoxideinheiten in der Komponente C) mindestens 5 und maximal 45 Gew.-%, bezogen auf das Gesamtgewicht der Komponenten C) und D), und die zahlenmittlere Funktionalität der Summe aller Polyole unter C) und D) 1,8 bis 2,5 beträgt, und der Gehalt an Ethylenoxideinheiten (X in Gew.-%) in der Komponente C) in Abhängigkeit von dem molaren Verhältnis Y aus Kettenverlängerer B) zu der Summe der Komponenten C) und D) unterhalb des sich aus der Formel X (Gew.-%) = 7,35 ^{∗} Y + 13,75 ergebenden Wertes für X liegt.

Die erfindungsgemäß in der Schicht (ii) eingesetzten TPU weisen überraschenderweise sehr gute Wasserdampfdurchlässigkeiten bei gleichzeitig äußerst niedriger Quellung auf und verfügen zudem über ausreichend gute mechanische Eigenschaften, so dass die erfindungsgemäßen Verbundteile zur Verfügung gestellt werden konnten.

Als organische Diisocyanate A) kommen vorzugsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im Einzelnen seien beispielhaft genannt: aliphatische Diisocyanate, wie 1,6-Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexandiisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, 4,4'-Dicyclohexylmethandiisocyanat, 1,5-Naphthylendiisocyanat und Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,6-Hexamethylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Als Kettenverlängerer B) werden ein oder mehrere Diole mit einem zahlenmittleren Molekulargewicht von 60 bis 490 g/mol eingesetzt, vorzugsweise aliphatische Diole mit vorzugsweise 2 bis 14 Kohlenstoffatomen, wie z.B. Ethandiol, 1,2-Propandiol, 1,3-Propandiol, Butandiol, Hexandiol, Diethylenglykol, Dipropylenglykol, insbesondere aliphatische Diole mit vorzugsweise 2 bis 8 Kohlenstoffatomen, bevorzugt 1,4-Butandiol und 1,6-Hexandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(-betahydroxyethyl)-hydrochinon und ethoxylierte Bisphenole, wie z.B. 1,4-Di-(betahydroxyethyl)-bisphenol A. Es können auch Gemische der oben genannten Kettenverlängerer eingesetzt werden, insbesondere zwei verschiedene, besonders bevorzugt aliphatische, Kettenverlängerer, insbesondere 1,4-Butandiol und 1,6-Hexandiol. Daneben können auch kleinere Mengen an Triolen zugesetzt werden.

Geeignete Polyetherpolyole für die Komponente C) können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherpolyole sind ferner die hydroxylgruppenhaltigen Polymerisationsprodukte des 1,3-Propandiol und des Tetrahydrofurans. Es können auch trifunktionelle Polyether eingesetzt werden, jedoch höchstens in solcher Menge, dass ein thermoplastisch verarbeitbares Produkt entsteht und die zahlenmittlere Funktionalität der Summe aller Polyetherpolyole unter C) und D) 1,8 bis 2,5 beträgt. Die vorzugsweise im wesentlichen linearen Polyetherpolyole besitzen zahlenmittlere Molekulargewichte von 500 bis 5000 g/mol. Die Polyetherpolyole können sowohl einzeln als auch in Form von Mischungen untereinander zur Anwendung kommen. In einer besonders bevorzugten Ausführung wird als Polyetherpolyol kein Poly(tetramethylenglykol) verwendet.

Die Komponente C) enthält mindestens ein Polyetherpolyol Cl), welches Ethylenoxideinheiten (-(O-CH₂-CH₂-)-Einheiten, auch als Oxyethyleneinheiten bezeichnet) enthält. Der Gehalt an Ethylenoxideinheiten in der Komponente C) beträgt mindestens 5 und maximal 45 Gew.-%, bevorzugt 21 bis 45 Gew.-%, besonders bevorzugt 21 bis 33 Gew.-%, bezogen auf das Gesamtgewicht aus C) und D), und der Gehalt an Ethylenoxideinheiten (X in Gew.-%) in der Komponente C) liegt in Abhängigkeit von dem molaren Verhältnis Y aus Kettenverlängerer B) zu der Summe der Komponenten C) und D) unterhalb des sich aus der Formel X (Gew.-%) = 7,35 ^{∗} Y + 13,75 ergebenden Wertes für X.

Als Ethylenoxideinheiten-haltige Polyetherpolyole Cl) werden bevorzugt aliphatische Polyetherpolyole aufgebaut aus Ethylenoxideinheiten und aus Propylenoxideinheiten (-(O-CH(CH₃)-CH₂-)- und/oder (-(O-CH₂-CH₂-CH₂-)-Einheiten, auch als Oxypropyleneinheiten bezeichnet) eingesetzt, deren zahlenmittlere Molekulargewichte vorzugsweise 1800 bis 3000 g/mol betragen. Insbesondere finden dabei diejenigen aus Ethylenoxideinheiten und aus Propylenoxideinheiten aufgebauten Polyetherpolyole Verwendung, die 30 bis 99 Gew.-% Ethylenoxideinheiten und 1 bis 70 Gew.-% Propylenoxideinheiten, bevorzugt 35 bis 99 Gew.-% Ethylenoxideinheiten und 1 bis 65 Gew.-% Propylenoxideinheiten, besonders bevorzugt 35 bis 55 Gew.-% Ethylenoxideinheiten und 45 bis 65 Gew.-% Propylenoxideinheiten enthalten. Darüber hinaus sind die aus Ethylenoxideinheiten und aus Propylenoxideinheiten aufgebauten Polyetherpolyole, die 1 bis 75%, insbesondere 50 bis 75%, primäre Hydroxylendgruppen aufweisen, besonders bevorzugt. Es handelt sich bei mindestens einem der Ethylenoxideinheiten enthaltenden Polyetherpolyole Cl) in der Komponente C) bevorzugt um eine oder mehrere Komponenten aus der Gruppe bestehend aus Poly(Ethylenglykol), einem Copolymer aus Ethylenoxideinheiten und 1,2-Propylenoxideinheiten, einem Copolymer aus Ethylenoxideinheiten und 1,3-Propylenoxideinheiten, einem Copolymer aus Ethylenoxideinheiten und 1,3-Propylenoxideinheiten und 1,2-Propylenoxideinheiten. In einer besonders bevorzugten Ausführung liegen die aus Ethylenoxideinheiten und aus Propylenoxideinheiten aufgebauten Polyetherpolyole Cl) nicht als Blockcopolymere vor. Die aus Ethylenoxideinheiten und aus Propylenoxideinheiten aufgebauten Polyetherpolyole Cl) können sowohl einzeln als auch in Form von Mischungen untereinander als auch im Gemisch mit einem oder mehreren vorzugsweise aliphatischen Polyetherpolyolen bevorzugt aus der Gruppe bestehend aus Poly(Ethylenglykol), Poly(1,2-Propylenglykol) und Poly(1,3-Propylenglykol) zur Anwendung kommen. Des Weiteren können auch Gemische aus Poly(Ethylenglykol) mit einem oder mehreren vorzugsweise aliphatischen Polyetherpolyolen bevorzugt aus der Gruppe bestehend aus Poly(1,2-Propylenglykol) und Poly(1,3-Propylenglykol) zum Einsatz kommen.

Es handelt sich bei der Komponente C) vorzugsweise um ein Komponenten-Gemisch aus der Gruppe bestehend aus Poly(Ethylenglykol) und Poly(1,2-Propylenglykol), aus Poly(Ethylenglykol) und Poly(1,3-Propylenglykol), aus Poly(Ethylenglykol) und Poly(1,3-Propylenglykol) und Poly(1,2-Propylenglykol), Poly(Ethylenglykol) und einem Polyol aufgebaut aus Ethylenoxideinheiten und aus Propylenoxideinheiten, aus Poly(1,2-Propylenglykol) und einem Polyol aufgebaut aus Ethylenoxideinheiten und aus Propylenoxideinheiten, aus Poly(1,3-Propylenglykol) und einem Polyol aufgebaut aus Ethylenoxideinheiten und aus Propylenoxideinheiten, aus Poly(Ethylenglykol) und Poly(1,2-Propylenglykol) und einem Polyol aufgebaut aus Ethylenoxideinheiten und aus Propylenoxideinheiten, aus Poly(Ethylenglykol) und Poly(1,3-Propylenglykol) und einem Polyol aufgebaut aus Ethylenoxideinheiten und aus Propylenoxideinheiten, aus Poly(Ethylenglykol) und Poly(1,3-Propylenglykol) und Poly(1,2-Propylenglykol) und einem Polyol aufgebaut aus Ethylenoxideinheiten und aus Propylenoxideinheiten.

TPU, die die in den vorangehenden Absätzen beschriebene Komponente C) enthalten, weisen sehr gute Wasserdampfdurchlässigkeiten bei gleichzeitig äußerst niedriger Quellung auf und verfügen zudem über ausreichend gute mechanische Eigenschaften.

Geeignete aliphatische Polyesterpolyole D) können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterpolyole vorzugsweise verwendet werden Ethandiolpolyadipate, 1,4-Butandiol-polyadipate, Ethandiol-1,4-butandiol-polyadipate, 1,6-Hexandiolneopentylglykol-polyadipate, 1,6-Hexandiol-1,4-butandiol-polyadipate und Poly-caprolactone. Die Polyesterpolyole besitzen zahlenmittlere Molekulargewichte von 500 bis 5000 g/mol und können einzeln oder in Form von Mischungen untereinander zur Anwendung kommen. Die aliphatischen Polyesterpolyole werden in einer Menge von 10 bis 85 Gew.-%, bevorzugt in einer Menge von 10 bis 55 Gew.-%, bezogen auf die Gesamtmenge von C) und D) eingesetzt.

Das molare Verhältnis zwischen dem Kettenverlängerer B) einerseits und der Summe der Polyole C) und D) andererseits beträgt vorzugsweise 0,68:1 bis 2,95:1.

Geeignete Katalysatoren E) für die TPU-Herstellung können die nach dem Stand der Technik bekannten und üblichen tertiären Amine sein, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan sowie vorzugsweise organische Metallverbindungen, wie z.B. Titansäureester, Eisenverbindungen, Zinnverbindungen, wie z.B. Zinndiacetat, Zinndioctoat, Zinndilaurat oder die Zinndialkylsalze aliphatischer Carbonsäuren, wie z.B. Dibutylzinndiacetat, Dibutylzinndilaurat. Besonders bevorzugte Katalysatoren sind organische Metallverbindungen, insbesondere Titansäureester, Eisen- oder Zinnverbindungen.

Neben den TPU-Komponenten und den Katalysatoren können auch andere Hilfsmittel und/oder Zusatzstoffe F) zugesetzt werden. Genannt seien beispielsweise Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Weiterhin zur Einarbeitung geeignet sind handelsübliche Weichmacher wie Phosphate, Adipate, Sebacate und Alkylsulfonsäureester.

Ebenso können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Zur Herstellung der TPU in der Schicht (ii) können die Aufbaukomponenten, gegebenenfalls in Gegenwart von Katalysatoren, Hilfsmitteln und Zusatzstoffen, in solchen Mengen zur Reaktion gebracht werden, dass das Äquivalenzverhältnis von NCO-Gruppen zur Summe der NCOreaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Als wasserdampfdurchlässige Schicht oder Schichten (i) des Verbundteils werden Schichten aus Textilien, Vliesen, thermoplastischen Polymeren, ausgenommen thermoplastischem Polyurethan, wie z.B. Polyethylen, Polypropylen, fluorierten Polyolefinen, Polyester und Polyamide, Papier oder Pappe oder Metallgitter verwendet. Unter wasserdampfdurchlässigen Schichten werden sowohl Schichten mit mechanisch erzeugten Löchern, durch die der Wasserdampf durchdringen kann, als auch Schichten, die von sich aus wasserdampfdurchlässig sind, verstanden. Besonders bevorzugt werden Vliese oder Textilien eingesetzt. Die Schichten (i) können einseitig oder beidseitig auf der Schicht (ii) aus TPU angeordnet sein.

Die für die Schicht (ii) verwendeten TPU können kontinuierlich im sogenannten Extruderverfahren, z.B. in einem Mehrwellenextruder, hergestellt werden. Die Dosierung der TPU-Komponenten A), B), C) und D) kann gleichzeitig, d.h. im one-shot-Verfahren, oder nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

Aus den verwendeten Polyetherpolyol und Polyesterpolyol basierten TPU lassen sich aus der Schmelze Filme und Folien sowie Beschichtungen mit großer Homogenität als Schicht (ii) herstellen. Die erfindungsgemäßen Verbundteile können als Dachunterspannbahnen und Fassadenspannbahnen verwendet werden.

Die Erfindung soll anhand der nachfolgenden Beispiele näher erläutert werden.

### Beispiele

### TPU- Herstellung

In einem Reaktionsgefäß wurde das jeweilige Polyol mit einer Temperatur von 200°C, in dem, jeweils bezogen auf das Gesamtgewicht aller Einsatzstoffe, 0,1 bis 0,36 Gew.-% Carbodiimid ILF (Bayer MaterialScience AG, Leverkusen, DE), 0,1 bis 0,88 Gew.-% Irganox® 1010 (Hersteller: BASF SE, Ludwigshafen, DE), gegebenenfalls 0,03 bis 0,09 Gew.-% Irgafos® PEPQ (BASF SE, Ludwigshafen, DE), 0 bis 0,01 Gew.-% KL3-2049 (Wärmestabilisator; Bayer MaterialScience AG, Leverkusen, DE) und 0,8 bis 0,83 Gew.-% Licolub® FA6 (Hersteller: Clariant, Gersthofen, DE) oder Loxamid® 3324 (Cognis Oleochemicals GmbH, Düsseldorf, DE) gelöst waren, vorgelegt. Dann wurden 1,4-Butandiol (BDO) und 1,6-Hexandiol (HDO), so viel 60°C warmes 4,4'-Diphenylmethandiisocyanat (MDI), dass die Kennzahl 0,995 betrug, und 10 bis 14ppm Titanacetylacetonat als Katalysator unter Rühren zugegeben und die gesamte Reaktionsmischung 10 bis 25 Sekunden lang intensiv gerührt. Anschließend wurde die viskose Reaktionsmischung auf ein beschichtetes Blech gegossen und bei 80°C 30 Minuten nachgetempert. Die erhaltenen Gießplatten wurden geschnitten und granuliert.

### Verwendete Rohstoffe:

- Polyol A: Polyether L5050 (OH-Zahl: 55,9-57,2 mg KOH/g, auf 1,2-Propylenglykol gestarteter bifunktioneller Polyether aufgebaut aus Ethylenoxid und Propylenoxid mit einem Ethylenoxid-Cap (ca. 10 Gew.-%), einem Ethylenoxidanteil von ca. 50 Gew.-% und mit 60-70% primären Hydroxylendgruppen); Bayer MaterialScience AG, Leverkusen, DE
- Polyol B: Acclaim® Polyol 2200 N (OH-Zahl: 56,1 mg KOH/g, Poly(1,2-Propylenglykol)); Bayer MaterialScience AG, Leverkusen, DE
- Polyol C: Polyether PW56 (OH-Zahl: 56,7 mg KOH/g, Poly(Ethylenglykol)); Bayer MaterialScience AG, Leverkusen, DE
- Polyol D: Polyester PE 225B (OH-Zahl: 50-50,9 mg KOH/g, Poly(1,4-Butandioladipat)); Bayer MaterialScience AG, Leverkusen, DE
- Polyol E: Polyester PE 90B (OH-Zahl: 117,7-120,7 mg KOH/g, Poly(1,4-Butandioladipat)); Bayer MaterialScience AG, Leverkusen, DE
- Polyol F: Desmophen® 2002H (OH-Zahl: 54,7-57,6 mg KOH/g, Poly(Ethandioladipat-co-1,4-Butandioladipat)); Bayer MaterialScience AG, Leverkusen, DE
- MDI: Desmodur® 44 M (4,4'-Diphenylmethandiisocyanat); Bayer MaterialScience AG, Leverkusen, DE
- BDO: 1,4-Butandiol; BASF SE, Ludwigshafen, DE
- HDO: 1,6-Hexandiol; Lanxess, Uerdingen, DE

**Tabelle 1: Herstellung von TPU**

| TPU | Polyetherpolyol | Polyetherpolyol | Polyesterpolyol | Polyesterpolyol | BDO | HDO | MDI |
|---|---|---|---|---|---|---|---|
| | | [Gew.-Tle.] | | [Gew.-Tle.] | [Gew.- Tle.] | [Gew.-Tle.] | [Gew.- Tle.] |
| 1* | B | 30,5 | D/E | 24,4/6,1 | 7,2 | 0,8 | 29,7 |
| 2 | A | 27,3 | D/E | 28,5/6,1 | 6,9 | 0,8 | 29,1 |
| 3 | A | 33,5 | D/E | 23,5/5,1 | 6,9 | 0,8 | 29,1 |
| 4* | C | 31 | D/E | 24,8/6,2 | 6,9 | 0,8 | 29,1 |
| 5 | A | 20,7 | D/E | 32,9/7,4 | 7,2 | 0,8 | 29,7 |
| 6 | A | 26,9 | D/E | 27,9/6,2 | 7,2 | 0,8 | 29,7 |
| 7* | A | 38,6 | D/E | 21,5/4,2 | 6,1 | 0,8 | 27 |
| 8 | A | 36 | D/E | 20,1/3,9 | 7,4 | 0,8 | 30 |
| 9* | A | 45,3 | F | 19,4 | 6,1 | 0,8 | 26,7 |
| 10 | A | 41,8 | F | 17,9 | 7,5 | 0,7 | 29,9 |
| 11 | A | 32,1 | D/E | 26,8/5,3 | 6,1 | 0,8 | 27 |
| 12* | A | 41,7 | D/E | 14,8/3 | 7,5 | 0,8 | 30,2 |
| 13* | A | 47,8 | D/E | 9,9/2 | 7,6 | 0,8 | 30,2 |
| 14* | A | 42 | D/E | 15,2/3 | 7,4 | 0,8 | 30 |
| 15 | A | 41,8 | F | 17,9 | 7,5 | 0,7 | 29,9 |
| 16* | A | 48 | F | 12 | 7,6 | 0,8 | 30 |
| 17* | C | 14,2 | D/E | 37,8/7,2 | 7,5 | 0,8 | 30,4 |
| 18* | C | 16,6 | D/E | 35,9/6,9 | 7,5 | 0,8 | 30,4 |
| 19 | A | 33 | D/E | 23/5,1 | 7,2 | 0,8 | 29,6 |
| 20 | A | 31,2 | D/E | 26,1/5,1 | 6,6 | 0,8 | 28,3 |
| 21 | A | 29,3 | D/E | 29,9/5,9 | 5,8 | 0,9 | 26,4 |
| 22 | A | 34,9 | D/E | 23,9/4,7 | 6,3 | 0,8 | 27,6 |
| 23 | A | 34,9 | D/E | 23,9/4,7 | 6,3 | 0,8 | 27,6 |
| 24* | A | 48,8 | D/E | 10,1/2,1 | 7,2 | 0,8 | 29,4 |
| 25* | A | 45,7 | D/E | 16,1/3,5 | 5,8 | 0,8 | 26,3 |
| 26 | A | 40,1 | D/E | 16,4/3,4 | 7,6 | 0,8 | 30,3 |
| 27* | A | 49 | F | 12,2 | 7,2 | 0,8 | 29,2 |

| | | | | | | | |
|---|---|---|---|---|---|---|---|
| * Vergleichsbeispiele | | | | | | | |

**Tabelle 2: Additiv- und Katalysatorgehalte der hergestellten TPU**

| TPU | Carbodiimid ILF | Irganox® 1010 | Irgafos® PEPQ | KL3-2049 | Licolub® FA6 | Loxamid® 3324 | Titanacetylacetonat |
|---|---|---|---|---|---|---|---|
| | [Gew.-%] | [Gew.-%] | [Gew.-%] | [Gew.-%] | [Gew.-%] | [Gew.-%] | [ppm] |
| 1* | 0,2 | 0,1 | - | - | 0,8 | - | 14 |
| 2 | 0,24 | 0,12 | - | - | 0,8 | - | 14 |
| 3 | 0,2 | 0,1 | - | - | 0,8 | - | 14 |
| 4* | 0,2 | 0,1 | - | - | 0,8 | - | 14 |
| 5 | 0,28 | 0,14 | - | - | 0,8 | - | 14 |
| 6 | 0,24 | 0,12 | - | - | 0,8 | - | 14 |
| 7* | 0,21 | 0,64 | 0,06 | 0,01 | - | 0,83 | 10 |
| 8 | 0,19 | 0,6 | 0,06 | 0,01 | - | 0,83 | 10 |
| 9* | 0,16 | 0,65 | 0,07 | 0,01 | - | 0,83 | 14 |
| 10 | 0,14 | 0,88 | 0,09 | 0,01 | 0,83 | - | 14 |
| 11 | 0,26 | 0,64 | 0,06 | 0,01 | - | 0,83 | 10 |
| 12* | 0,14 | 0,88 | 0,09 | 0,01 | 0,83 | - | 14 |
| 13* | 0,1 | 0,6 | 0,06 | 0,01 | 0,83 | - | 14 |
| 14* | 0,15 | 0,6 | 0,06 | 0,01 | - | 0,83 | 10 |
| 15 | 0,14 | 0,88 | 0,09 | 0,01 | 0,83 | - | 14 |
| 16* | 0,1 | 0,59 | 0,06 | 0,01 | 0,83 | - | 14 |
| 17* | 0,36 | 0,7 | 0,07 | 0,01 | 0,83 | - | 14 |
| 18* | 0,34 | 0,66 | 0,07 | 0,004 | 0,83 | - | 14 |
| 19 | 0,2 | 0,1 | - | - | 0,8 | - | 14 |
| 20 | 0,25 | 0,63 | 0,06 | 0,01 | - | 0,83 | 10 |
| 21 | 0,29 | 0,65 | 0,06 | 0,01 | - | 0,83 | 10 |
| 22 | 0,23 | 0,64 | 0,07 | 0,01 | - | 0,83 | 10 |
| 23 | 0,23 | 0,64 | 0,07 | 0,01 | - | 0,83 | 10 |
| 24* | 0,1 | 0,6 | 0,06 | 0,01 | 0,83 | - | 14 |
| 25* | 0,16 | 0,65 | 0,06 | 0,01 | 0,83 | - | 14 |
| 26 | 0,16 | 0,3 | 0,03 | 0,002 | 0,83 | - | 14 |
| 27* | 0,1 | 0,6 | 0,06 | 0,01 | 0,83 | - | 14 |

| | | | | | | | |
|---|---|---|---|---|---|---|---|
| * Vergleichsbeispiele | | | | | | | |

### TPU- Folien-Herstellung

Die TPU-Granulate 1 bis 27 wurden jeweils in einem Einwellen-Extruder (Einwellen-Extruder 30/25D Plasticorder PL 2100-6, Fa.Brabender) aufgeschmolzen (Dosierung ca. 3 kg/h; 185-225°C) und durch eine Breitschlitzdüse jeweils zu einer Flachfolie extrudiert.

### Messung der Wasserdampfdurchlässigkeit (WDD) des Verbundteils durch Messung der WDD der eingesetzten TPU-Folien

Die Wasserdampfdurchlässigkeit (WDD) der hergestellten Folien wurde in Anlehnung an die DIN 53122 bestimmt. Die Folien wurden dazu auf ein 50ml- oder ein 100ml-Gefäß (Durchmesser 46,5mm) aufgespannt und fixiert. In das Gefäß wurden zuvor 40g 12h lang bei 130°C ausgeheiztes Silicagel-Granulat (1-3mm Durchmesser, mit Indikator) eingefüllt. Das Gefäß wurde zur Messung in einem Exsikkator über gesättigter wässriger Kaliumchlorid-Lösung (Luftfeuchte ca. 85%) und bei Raumtemperatur konditioniert. Alle 2h erfolgte eine Gewichtsbestimmung bis zur Konstanz der Gewichtszunahme (6-8h). Beim Vergleich von WDD-Werten ist zu berücksichtigen, dass aufgrund von Temperaturunterschieden zwischen Messungen an verschiedenen Tagen nur Ergebnisse von Proben miteinander verglichen werden können, die zeitgleich zusammen im selben Exsikkator getestet wurden.

### Bestimmung der Quellung der TPU-Folien

Zur Bestimmung der Intensität der Quellung wurden auf die Flachfolien Wassertropfen aufgebracht, die nach einer Einwirkzeit von 10min vorsichtig mit einem saugfähigen Tuch wieder entfernt wurden. Die Stellen, an denen sich zuvor die Wassertropfen befunden hatten, wurden daraufhin untersucht, ob sich die Flachfolie vom Untergrund abgehoben hatte (starkes Quellen) oder nicht (kein bzw. geringes Quellen).

### Herstellung von TPU-Spritzgießplatten zur Messung der mechanischen Eigenschaften der eingesetzten TPU

Die TPU-Granulate wurden in einer Spritzgießmaschine Allrounder 470 S 1000-290 (30 mm-Schnecke) der Firma Arburg aufgeschmolzen und zu S1-Stäben geformt (Massetemperatur ca. 220°C, Formtemperatur: 25°C; Stabgröße: 115x25/6x2mm).

### Messung der mechanischen Eigenschaften

Die Reißfestigkeit und die Reißdehnung wurden durch Messungen im Zugversuch nach DIN 53504 an S1-Stäben bestimmt.

Die wichtigsten Eigenschaften der so hergestellten TPU-Folien bzw. S1-Stäbe sind in den Tabellen 3 und 4 angegeben.

**Tabelle 3: Wasserdampfdurchlässigkeit (WDD) und Quellung der TPU-Folien**

| TPU | Mole aller KV : Mole aller Polyole | Polyetherpolyol | Ethylenoxidgruppen in Komponente C) und D) | Quellung | Foliendicke | WDD |
|---|---|---|---|---|---|---|
| | | [Gew.- Tle.] | [Gew.-%] | | [µm] | [g/m²/d] |
| 1* | 2,64 | 30,5 | 0 | keine | 50 | 147 |
| 2 | 2,53 | 27,3 | 22 | keine | 60 | 194 |
| 3 | 2,68 | 33,5 | 27 | sehr gering | 60 | 222 |
| 4* | 2,5 | 31 | 50 | stark | 60 | 274 |
| 5 | 2,63 | 34 | 17 | keine | 50 | 179 |
| 6 | 2,65 | 44 | 22 | keine | 50 | 250 |
| 7* | 2,21 | 60 | 30 | stark | 50 | 464 |
| 8 | 2,85 | 60 | 30 | keine | 45 | 326 |
| 9* | 2,3 | 70 | 35 | stark | 30 | 259 |
| 10 | 2,99 | 70 | 35 | gering | 70 | 147 |
| 11 | 2,19 | 50 | 25 | keine | 45 | 420 |
| 12* | 2,89 | 70 | 35 | mittel bis stark | 35 | 269 |
| 13* | 2,91 | 80 | 40 | stark | 35 | 299 |
| 14* | 2,85 | 70 | 35 | stark | 55 | 412 |
| 15 | 2,99 | 70 | 35 | gering | 35 | 252 |
| 16* | 2,98 | 80 | 40 | stark | 33 | 292 |
| 17* | 2,79 | 24 | 24 | mittel | 35 | 163 |
| 18* | 2,8 | 28 | 28 | stark | 35 | 187 |

| | | | | | | |
|---|---|---|---|---|---|---|
| * Vergleichsbeispiele; KV = Kettenverlängerer | | | | | | |

Die erfindungsgemäßen Beispiele zeigen gute Wasserdampfdurchlässigkeit bei gleichzeitig geringer Quellung (siehe Tabelle 3).

**Tabelle 4: Quellung, Reißfestigkeit und Reißdehnung**

| TPU | Quellung | Reißfestigkeit MPa | Reißdehnung % |
|---|---|---|---|
| 7* | stark | 27,4 | 945 |
| 8 | keine | 31,8 | 795 |
| 9* | stark | 27,7 | 1045 |
| 11 | keine | 45,3 | 755 |
| 12* | mittel bis stark | 19,9 | 939 |
| 13* | stark | 28,4 | 876 |
| 14* | stark | 30,1 | 880 |
| 15 | gering | 31,1 | 837 |
| 16* | stark | 28,9 | 879 |
| 20 | keine | 28,9 | 854 |
| 21 | keine | 21,5 | 960 |
| 22 | sehr gering | 36,6 | 835 |
| 24* | stark | 29,5 | 874 |
| 25* | stark | 25,5 | 1069 |
| 26 | gering | 30,8 | 837 |
| 27* | sehr stark | 25,3 | 967 |

| | | | |
|---|---|---|---|
| * Vergleichsbeispiele | | | |

Die Quellung der erfindungsgemäßen TPU ist gering bei gleichzeitig ausreichender Reißfestigkeit und Reißdehnung (siehe Tabelle 4).

Die erfindungsgemäß verwendeten TU-Folien auf Basis vergleichsweise kostengünstiger Polyetherpolyole mit ausreichender Reaktivität zeigen gute Wasserdampfdurchlässigkeiten sowie ausreichende mechanische Eigenschaften bei gleichzeitig niedriger Quellung, so dass damit flächige Verbundteile mit den entsprechenden Eigenschaften zur Verfügung gestellt werden können.

## Patentansprüche

1. Wasserdampfdurchlässiges flächiges Verbundteil bestehend aus mindestens einer Schicht (i), die nicht aus thermoplastischem Polyurethan besteht, ausgewählt aus der Gruppe bestehend aus Schichten aus Textilien, Vliesen, thermoplastischen Polymeren, Papier oder Pappe oder Metallgitter mit mechanisch erzeugten Löchern, mindestens einer Schicht (ii) aus Polyetherpolyol und Polyesterpolyol basiertem thermoplastischem Polyurethan und gegebenenfalls weiteren Schichten (iii) aus thermoplastischem Polyurethan, die nicht direkt flächig an die Schicht (ii) angrenzen, wobei die Schicht (ii) aus einem thermoplastischen Polyurethan besteht, das erhältlich ist aus der Reaktion der Komponenten bestehend aus
A) mindestens einem organischen Diisocyanat,
B) mindestens einer Komponente mit zwei Hydroxylgruppen und jeweils einem zahlenmittleren Molekulargewicht von 60 bis 490 g/mol als Kettenverlängerer,
C) einer Komponente bestehend aus einem oder mehreren Polyetherpolyolen mit jeweils einem zahlenmittleren Molekulargewicht von 500-5000 g/mol, von denen mindestens ein Polyetherpolyol (C1) Ethylenoxideinheiten enthält,
D) 10 bis 85 Gew.-% bezogen auf die Gesamtmenge von C) und D) eines oder mehrerer aliphatischer Polyesterpolyole mit jeweils einem zahlenmittleren Molekulargewicht von 500-5000 g/mol,
in Gegenwart von
E) gegebenenfalls Katalysatoren,
F) gegebenenfalls Hilfs- und/oder Zusatzstoffen,
wobei das Molverhältnis der NCO-Gruppen in A) zu den gegenüber Isocyanat reaktiven Gruppen in B), C) und D) 0,9:1 bis 1,2:1 beträgt,
**dadurch gekennzeichnet, dass** der gesamte Gehalt an Ethylenoxideinheiten in der Komponente C) mindestens 5 und maximal 45 Gew.-%, bezogen auf das Gesamtgewicht der Komponenten C) und D), und die zahlenmittlere Funktionalität der Summe aller Polyole unter C) und D) 1,8 bis 2,5 beträgt, und der Gehalt an Ethylenoxideinheiten (X in Gew.-%) in der Komponente C) in Abhängigkeit von dem molaren Verhältnis Y aus Kettenverlängerer B) zu der Summe der Komponenten C) und D) unterhalb des sich aus der Formel X (Gew.-%) = 7,35 ^{∗} Y + 13,75 ergebenden Wertes für X liegt.

2. Flächiges Verbundteil gemäß Anspruch 1, wobei es sich bei dem Diisocyanat A) um 4,4'-Diphenylmethandiisocyanat, Isophorondiisocyanat, 1,6-Hexamethylendiisocyanat, 1,5-Naphthylendiisocyanat oder 4,4'-Dicyclohexylmethandiisocyanat oder ein Gemisch daraus handelt.

3. Flächiges Verbundteil gemäß Anspruch 1, wobei es sich bei dem Kettenverlängerer B) um mindestens einen aliphatischen Kettenverlängerer mit zwei Hydroxylgruppen handelt.

4. Flächiges Verbundteil gemäß Anspruch 1, wobei es sich bei dem Kettenverlängerer B) um mindestens einen aliphatischen Kettenverlängerer mit zwei Hydroxylgruppen und zwei bis acht Kohlenstoffatomen handelt.

5. Flächiges Verbundteil gemäß Anspruch 1, wobei es sich bei dem Kettenverlängerer B) um mindestens eine Verbindung aus der Gruppe bestehend aus Ethandiol, Propandiol, Butandiol, Hexandiol, 1,4-Di-(betahydroxyethyl)-hydrochinon, 1,4-Di-(betahydroxyethyl)-bisphenol A oder Gemische daraus handelt.

6. Flächiges Verbundteil gemäß Anspruch 1, wobei der Kettenverlängerer B) mindestens zwei aliphatische Kettenverlängerer mit jeweils zwei Hydroxylgruppen enthält.

7. Flächiges Verbundteil gemäß Anspruch 6, wobei die mindestens zwei aliphatischen Kettenverlängerer jeweils zwei Hydroxylgruppen und jeweils zwei bis acht Kohlenstoffatome aufweisen.

8. Flächiges Verbundteil gemäß Anspruch 1, wobei es sich bei mindestens einem der Ethylenoxideinheiten enthaltenden Polyetherpolyole C1) in der Komponente C) um eine Komponente oder mehrere Komponenten aus der Gruppe bestehend aus Poly(Ethylenglykol), einem Copolymer aus Ethylenoxideinheiten und 1,2-Propylenoxideinheiten, einem Copolymer aus Ethylenoxideinheiten und 1,3-Propylenoxideinheiten, einem Copolymer aus Ethylenoxideinheiten und 1,3-Propylenoxideinheiten und 1,2-Propylenoxideinheiten handelt.

9. Flächiges Verbundteil gemäß Anspruch 1, wobei es sich bei der Komponente C) um ein Komponenten-Gemisch aus der Gruppe bestehend aus Poly(Ethylenglykol) und Poly(1,2-Propylenglykol), aus Poly(Ethylenglykol) und Poly(1,3-Propylenglykol), aus Poly(Ethylenglykol) und Poly(1,3-Propylenglykol) und Poly(1,2-Propylenglykol), Poly(Ethylenglykol) und einem Polyol aufgebaut aus Ethylenoxideinheiten und aus Propylenoxideinheiten, aus Poly(1,2-Propylenglykol) und einem Polyol aufgebaut aus Ethylenoxideinheiten und aus Propylenoxideinheiten, aus Poly(1,3-Propylenglykol) und einem Polyol aufgebaut aus Ethylenoxideinheiten und aus Propylenoxideinheiten, aus Poly(Ethylenglykol) und Poly(1,2-Propylenglykol) und einem Polyol aufgebaut aus Ethylenoxideinheiten und aus Propylenoxideinheiten, aus Poly(Ethylenglykol) und Poly(1,3-Propylenglykol) und einem Polyol aufgebaut aus Ethylenoxideinheiten und aus Propylenoxideinheiten, aus Poly(Ethylenglykol) und Poly(1,3-Propylenglykol) und Poly(1,2-Propylcnglykol) und einem Polyol aufgebaut aus Ethylenoxideinheiten und aus Propylenoxideinheiten handelt.

10. Flächiges Verbundteil gemäß Anspruch 1, wobei die Polyetherpolyole in der Komponente C) zusammen einen Gehalt an Ethylenoxideinheiten von 21 bis 33 Gew.-% bezogen auf das Gesamtgewicht aus C) und D) aufweisen.

11. Flächiges Verbundteil gemäß Anspruch 1, wobei mindestens eines der Ethylenoxideinheiten enthaltenden Polyetherpolyole C1) in der Komponente C) zusätzlich Propylenoxideinheiten enthält und 1 bis 75% primäre Hydroxylendgruppen aufweist.

12. Flächiges Verbundteil gemäß Anspruch 1, wobei mindestens eines der Ethylenoxideinheiten enthaltenden Polyetherpolyole C1) in der Komponente C) aus 30 bis 99 Gew.-% Ethylenoxideinheiten und 1 bis 70 Gew.-% Propylenoxideinheiten aufgebaut ist.

13. Flächiges Verbundteil gemäß Anspruch 1, wobei es sich bei der Komponente C) nicht um Poly(tetramethylenglykol) handelt.

14. Flächiges Verbundteil gemäß Anspruch 1, wobei die Polyesterpolyole unter D) in einer Menge von 10 bis 55 Gew.-% bezogen auf die Gesamtmenge von C) und D) enthalten sind.

15. Verwendung der flächigen Verbundteile gemäß Anspruch 1 bis 14 zur Herstellung von Dachunterspannbahnen und Fassadenspannbahnen.

## Claims

1. Water vapour-permeable flat composite component consisting of at least one layer (i) not consisting of thermoplastic polyurethane and selected from the group consisting of layers of textiles, nonwovens, thermoplastic polymers, paper or cardboard or metal meshes with mechanically produced holes, at least one layer (ii) composed of polyether polyol- and polyester polyol-based thermoplastic polyurethane and optionally further layers (iii) composed of thermoplastic polyurethane that do not directly adjoin the layer (ii) with a flat join, where the layer (ii) consists of a thermoplastic polyurethane obtainable from the reaction of the components consisting of
A) at least one organic diisocyanate,
B) at least one component having two hydroxyl groups and in each case having a
number-average molecular weight of 60 to 490 g/mol as chain extender,
C) a component consisting of one or more polyether polyols each having a number-average molecular weight of 500-5000 g/mol, of which at least one polyether polyol (C1) contains ethylene oxide units,
D) 10% to 85% by weight, based on the total amount of C) and D), of one or more aliphatic polyester polyols each having a number-average molecular weight of 500-5000 g/mol,
in the presence of
E) optionally catalysts,
F) optionally assistants and/or additives,
where the molar ratio of the NCO groups in A) to the isocyanate-reactive groups in B), C) and D) is 0.9:1 to 1.2:1,
**characterized in that** the total content of ethylene oxide units in component C) is at least 5% and not more than 45% by weight, based on the total weight of components C) and D), and the number-average functionality of the sum total of all the polyols in C) and D) is 1.8 to 2.5, and the content of ethylene oxide units (X in % by weight) in component C), relative to the molar ratio Y of chain extenders B) to the sum total of components C) and D), is below the value of X which arises from the formula X (% by weight) = 7.35 * Y + 13.75.

2. Flat composite component according to Claim 1, wherein the diisocyanate A) is diphenylmethane 4,4'-diisocyanate, isophorone diisocyanate, hexamethylene 1,6-diisocyanate, naphthylene 1,5-diisocyanate or dicyclohexylmethane 4,4'-diisocyanate or a mixture thereof.

3. Flat composite component according to Claim 1, wherein the chain extender B) is at least one aliphatic chain extender having two hydroxyl groups.

4. Flat composite component according to Claim 1, wherein the chain extender B) is at least one aliphatic chain extender having two hydroxyl groups and two to eight carbon atoms.

5. Flat composite component according to Claim 1, wherein the chain extender B) is at least one compound from the group consisting of ethanediol, propanediol, butanediol, hexanediol, 1,4-di(beta-hydroxyethyl)hydroquinone, 1,4-di(beta-hydroxyethyl)bisphenol A or mixtures thereof.

6. Flat composite component according to Claim 1, wherein the chain extender B) contains at least two aliphatic chain extenders each having two hydroxyl groups.

7. Flat composite component according to Claim 6, wherein the at least two aliphatic chain extenders each have two hydroxyl groups and each have two to eight carbon atoms.

8. Flat composite component according to Claim 1, wherein at least one of the polyether polyols C1) containing ethylene oxide units in component C) is one component or a plurality of components from the group consisting of poly(ethylene glycol), a copolymer of ethylene oxide units and 1,2-propylene oxide units, a copolymer of ethylene oxide units and 1,3-propylene oxide units, a copolymer of ethylene oxide units and 1,3-propylene oxide units and 1,2-propylene oxide units.

9. Flat composite component according to Claim 1, wherein component C) is a component mixture from the group consisting of poly(ethylene glycol) and poly(1,2-propylene glycol), of poly(ethylene glycol) and poly(1,3-propylene glycol), of poly(ethylene glycol) and poly(1,3-propylene glycol) and poly(1,2-propylene glycol), poly(ethylene glycol) and a polyol formed from ethylene oxide units and from propylene oxide units, of poly(1,2-propylene glycol) and a polyol formed from ethylene oxide units and from propylene oxide units, of poly(1,3-propylene glycol) and a polyol formed from ethylene oxide units and from propylene oxide units, of poly(ethylene glycol) and poly(1,2-propylene glycol) and a polyol formed from ethylene oxide units and from propylene oxide units, of poly(ethylene glycol) and poly(1,3-propylene glycol) and a polyol formed from ethylene oxide units and from propylene oxide units, of poly(ethylene glycol) and poly(1,3-propylene glycol) and poly(1,2-propylene glycol) and a polyol formed from ethylene oxide units and from propylene oxide units.

10. Flat composite component according to Claim 1, wherein the polyether polyols in component C) together have a content of ethylene oxide units of 21% to 33% by weight, based on the total weight of C) and D).

11. Flat composite component according to Claim 1, wherein at least one of the polyether polyols C1) containing ethylene oxide units in component C) additionally contains propylene oxide units and has 1% to 75% primary hydroxyl end groups.

12. Flat composite component according to Claim 1, wherein at least one of the polyether polyols C1) containing ethylene oxide units in component C) is formed from 30% to 99% by weight of ethylene oxide units and 1% to 70% by weight of propylene oxide units.

13. Flat composite component according to Claim 1, wherein component C) is not poly(tetramethylene glycol).

14. Flat composite component according to Claim 1, wherein the polyester polyols in D) are present in an amount of 10% to 55% by weight, based on the total amount of C) and D).

15. Use of the flat composite components according to Claims 1 to 14 for production of roofing underlayment and exterior underlayment.

## Revendications

1. Pièce composite sensiblement bidimensionnelle perméable à la vapeur d'eau, laquelle pièce comprenant au moins une couche (i) qui n'est pas en polyuréthane thermoplastique, qui est choisie dans le groupe comprenant les couches en textiles, en non-tissés, en polymères thermoplastiques, en papier ou en carton ou en grille métallique pourvue de trous générés mécaniquement, au moins une couche (ii) en polyuréthane thermoplastique à base de polyéther polyol et de polyester polyol et éventuellement des couches supplémentaires (iii) en polyuréthane thermoplastique qui ne sont pas directement adjacentes à la couche (ii) de manière sensiblement bidimensionnelle, la couche (ii) comprenant un polyuréthane thermoplastique qui est obtenu à partir de la réaction des composants comprenant
A) au moins un diisocyanate organique,
B) au moins un composant pourvu de deux groupes hydroxyle et ayant chacun un poids moléculaire moyen en nombre de 60 à 490 g/mol en tant que prolongateur de chaîne,
C) un composant comprenant un ou plusieurs polyéther polyols ayant chacun un poids moléculaire moyen en nombre de 500 à 5000 g/mol, dont au moins un polyéther polyol (C1) contient des unités oxyde d'éthylène,
D) 10 à 85 % en poids sur la base de la quantité totale de C) et D) d'un ou de plusieurs polyester polyols aliphatiques, ayant chacun un poids moléculaire moyen en nombre de 500 à 5000 g/mol,
en présence
E) éventuellement de catalyseurs,
F) éventuellement d'auxiliaires et/ou d'additifs,
le rapport molaire des groupes NCO en A) aux groupes réactifs avec les isocyanates en B), C) et D) étant de 0,9:1 à 1,2:1,
**caractérisée en ce que** la teneur totale en unités d'oxyde d'éthylène dans le composant C) est d'au moins 5 % en poids et de 45 % en poids maximum, sur la base du poids total des composants C) et D), et de la fonctionnalité moyenne en nombre de la somme de tous les polyols sous C) et D) est de 1,8 à 2,5, et la teneur en unités d'oxyde d'éthylène (X en % en poids) dans le composant C) en fonction du rapport molaire Y des prolongateurs de chaîne B) à la somme des composants C) et D) est inférieure à la valeur de X résultant de la formule X (% en poids) = 7,35 ^{∗} Y + 13,75.

2. Pièce composite sensiblement bidimensionnelle selon la revendication 1, le diisocyanate A) étant le diisocyanate de 4,4'-diphénylméthane, le diisocyanate d'isophorone, le diisocyanate de 1,6-hexaméthylène, le diisocyanate de 1,5-naphtylène ou le diisocyanate de 4,4'-dicyclohexylméthane ou un mélange de ceux-ci.

3. Pièce composite sensiblement bidimensionnelle selon la revendication 1, le prolongateur de chaîne B) étant au moins un prolongateur de chaîne aliphatique comprenant deux groupes hydroxyle.

4. Pièce composite sensiblement bidimensionnelle selon la revendication 1, le prolongateur de chaîne B) étant au moins un prolongateur de chaîne aliphatique comprenant deux groupes hydroxyle et deux à huit atomes de carbone.

5. Pièce composite sensiblement bidimensionnelle selon la revendication 1, le prolongateur de chaîne B) étant au moins un composé du groupe comprenant l'éthanediol, le propanediol, le butanediol, l'hexanediol, la 1,4-di-(bétahydroxyéthyl)-hydroquinone, le 1,4-di-(bétahydroxyéthyl)-bisphénol A ou des mélanges de ceux-ci.

6. Pièce composite sensiblement bidimensionnelle selon la revendication 1, **caractérisée en ce que** le prolongateur de chaîne B) contient au moins deux prolongateurs de chaîne aliphatiques comportant chacun deux groupes hydroxyle.

7. Pièce composite sensiblement bidimensionnelle selon la revendication 6, **caractérisée en ce que** les au moins deux prolongateurs de chaîne aliphatiques comportent chacun deux groupes hydroxyle et deux à huit atomes de carbone.

8. Pièce composite sensiblement bidimensionnelle selon la revendication 1, l'un au moins des polyéther polyols C1), contenant des unités d'oxyde d'éthylène, dans le composant C) est un composant, ou une pluralité de composants, du groupe comprenant du polyéthylène glycol, un copolymère d'unités d'oxyde d'éthylène et d'unités d'oxyde de 1,2-propylène, un copolymère d'unités d'oxyde d'éthylène et d'unités d'oxyde de 1,3-propylène, un copolymère d'unités d'oxyde d'éthylène et d'unités d'oxyde de 1,3-propylène et d'unités d'oxyde de 1,2-propylène.

9. Pièce composite sensiblement bidimensionnelle selon la revendication 1, le composant C) étant un mélange de composants du groupe comprenant du polyéthylène glycol et du poly-1,2-propylène glycol, du polyéthylène glycol et du poly-1,3-propylène glycol, du polyéthylène glycol et du poly-1,3-propylène glycol et du poly-1,2-propylène glycol), du polyéthylène glycol et un polyol comprenant des unités d'oxyde d'éthylène et des unités d'oxyde de propylène, du poly-1,2-propylène glycol et un polyol comprenant des unités d'oxyde d'éthylène et des unités d'oxyde de propylène, du poly-1,3-propylène glycol et un polyol comprenant des unités d'oxyde d'éthylène et des unitéss d'oxyde de propylène, du polyéthylène glycol et du poly-1,2-propylène glycol et un polyol comprenant des unités d'oxyde d'éthylène et des unités d'oxyde de propylène, du polyéthylène glycol et du poly-1,3-propylène glycol et un polyol comprenant des unités d'oxyde d'éthylène et des unités d'oxyde de propylène, de polyéthylène glycol et du poly-1,3-propylène glycol et poly-1,2-propylène glycol et un polyol comprenant des unités d'oxyde d'éthylène et des unités d'oxyde de propylène.

10. Pièce composite sensiblement bidimensionnelle selon la revendication 1, les polyéther polyols du composant C) ayant conjointement une teneur en unité d'oxyde d'éthylène de 21 à 33 % en poids par rapport au poids total de C) et D).

11. Pièce composite sensiblement bidimensionnelle selon la revendication 1, l'un au moins des polyéther polyols C1), contenant des unités d'oxyde d'éthylène, dans le composant C) comportant en outre des unités d'oxyde de propylène et 1 à 75 % de groupes terminaux hydroxyle primaires.

12. Pièce composite sensiblement bidimensionnelle selon la revendication 1, l'un au moins des polyéther polyols C1), contenant des unités d'oxyde d'éthylène, dans le composant C) comprenant de 30 à 99 % en poids d'unités d'oxyde d'éthylène et de 1 à 70 % en poids d'unités d'oxyde de propylène.

13. Pièce composite sensiblement bidimensionnelle selon la revendication 1, le composant C) n'étant pas du polytétraméthylène glycol.

14. Pièce composite sensiblement bidimensionnelle selon la revendication 1, les polyesters polyols de D) étant contenus dans une quantité de 10 à 55 % en poids par rapport à la quantité totale de C) et D).

15. Utilisation des pièces composites sensiblement bidimensionnelles selon les revendications 1 à 14 pour réaliser des panneaux de sous-toiture et des panneaux de façade.
